# EUROPEAN PATENT APPLICATION

(11) **EP 2 110 991 A1**
(43) Date of publication of application: **21.10.2009**
(21) Application number: 08305100.3
(22) Date of filing: 14.04.2008
(51) Int. Cl.: H04L 12/24

(54) **Method for managing a network as well as corresponding network management application and network managed system**

(71) Applicant: Alcatel Lucent, 75008 Paris (FR)
(72) Inventor: Grignac, Alain, 78150 Le Chesnay (FR); Attal, Denis, 92320 Chatillon (FR)
(74) Representative: Hervouet, Sylvie

(57) **Abstract**

The invention concerns a method for managing a network comprising a management application (3) adapted to transmit commands to a managed system (2). According to the invention, said method comprises the step of:
- defining at least one XML document (20) in said managed system, said XML document (20) including a list of elementary resources related to data and functions of said managed system (2), and being identified by an unique identifier;
- transmitting (S1, S2, S3) from said management application generic commands enabling to read, update, create or delete said elementary resources of said XML document (20) by using said unique identifier.

## Description

The present invention relates generally to management application solutions, in particular to a method of managing a network comprising a management application adapted to transmit commands to a managed system, and to corresponding network managed element and specific network management application for the implementation of the method.

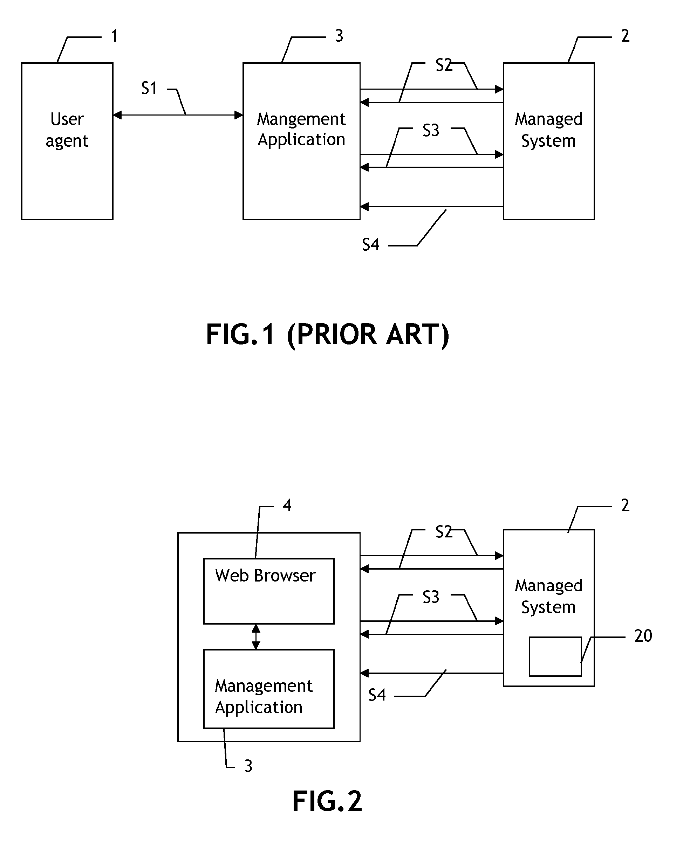

A management solution can be considered to be a set of components implemented in different networks elements to enable the control of a specific element. As shown in figure 1, a management solution can be considered to be made of at least three different categories of components. More precisely, current management application solution consists on a user agent 1 which is currently an interface used by an end-user, for instance a system administrator, to interact (step S1 in figure 1) with a managed system 2 by using services provided by a management application 3.

Usually the interaction between management application 3 and managed system 2 are classified into three categories:
- Operations launched by management application 3 to collect information on managed system 2. These operations do not impact managed system 2 and are idempotent (step S2 in figure 1);
- Operations launched by management application 3 to modify the way managed system 2 behave, or at least modify the data exposed, used or stored by managed system 2 (step S3 in figure 1);
- Message sent by managed system 2 to management application 3 about specific event occurring on managed system 2 (step S4 in figure 1).

To correctly perform these interactions, management application 3 must be able to send adapted commands to collect and modify data contained in managed system 2 and, must be able to interpret correctly message data returned by said managed system 2. In order to do so, management application 3 must be provided with specific management information previously to any exchange with managed system 2.

Specific management information is namely relative to:
- A set of functions present in managed system 2;
- A data hierarchy representative of the organization of the data, which are sent from the managed system 2 to the application management 3; and
- Interface information corresponding to a set of commands understandable by managed system 2 and a set of messages which can be returned by managed system 2.

Each time management application 3 exchanges data with managed system 2, it must refer to this management information.

For instance, when a network administrator wants to manage a managed system 2 which is able to perform interactions using SNMP protocol, he must indicated to management application 3 managed system 2 is able to understand SNMP interactions and must also provide management application 3 with management information specific to said managed system 2. Once management application 3 has been provided with such management information, it can:
- Collect information on managed system 2 using GET, GETNEXT or GETBULK command (step S2 in figure 1);
- Modify the way managed system 2 behaves using SET command (step S3 in figure 1);
- Interpret message sent by managed system 2 using Trap or Inform command (step S4 in figure 1).

Due to the necessity to refer to management information appropriated to a given managed system, management application 3 is only dedicated to the management of this managed system and possibly to other managed system provided with same functions, data and interfaces.

However, depending on the purpose they are used or the functional environment in which they are deployed, systems which are susceptible to be managed are often provided with different functions, data and interfaces. Thus, if the network administrator wants to manage a second system, for instance provided with a CMIS interface, with the same management application 3, the management information provided for the management of the first managed system 2 are unusable for managing this second managed system. The network administrator must provide management application 3 with management information relative to the second managed system.

Once management application 3 has been provided with such management information, it can:
- Collect information on the second managed system using M-GET command;
- Modify the way the managed system behave using M-SET, M-CREATE, M-DELETE command;
- Interpret message sent by the managed system using M-EVENT command.

As it has been illustrated above, the fact to be obliged to provide management application 3 with such management information previously to any interaction between management application 3 and managed system 2 generates interoperability difficulties.

In addition, network manager uses very often intermediary nodes which perform additional controls on the managed element or add value to the interactions supplied between a managed system 2 and a management application 3. But it is also difficult to add such intermediary nodes between managed system 2 and management application 3 since these intermediary nodes, if they are not implemented with management specification, will not be able to interpret the interactions.

To minimize the undesirable effects of the use of such management information, different frameworks and protocols have been developed and even standardized to provide more interoperable and more scalable management solutions.

In a first time, different standard tree representations of the data hierarchy have been defined. These standard representations such as MIB/MIT were used to begin a harmonization of the management information. With this harmonization, the interpretation of data hierarchy can be done in the same way by a management application for several managed systems. However, management application must still be provided with specific management information for each managed system 2 in the control application module.

In a second time, new approaches have been essentially based on the fact that many interface information could be put on common to a plurality of managed systems. Thus, a plurality of standard protocols such as SOAP or WSDL has been developed to create and manage generic interface information between a management application and a managed element.

However, although these new standards enable the use of generic interface information, these approaches maintain an RPC model (Remote Procedure Call), and thus, before a management application can perform interaction with a managed system, it must still be provided with management information.

The present invention proposes a new management solution avoiding the different drawbacks of current solutions.

To this end, a first object of the invention is method for managing a network comprising a management application adapted to transmit commands to a managed system, **characterized in that** said method comprises the step of:
- defining at least one XML document in said managed system, said XML document including a list of elementary resources related to data and functions of said managed system, and being identified by an unique identifier;
- transmitting from said management application generic commands enabling to read, update, create or delete said elementary resources of said XML document by using said unique identifier.

A second object of the invention is a network managed system adapted to receive commands from a network management application, **characterized in that** it comprises at least one XML document including a list of elementary resources relative to data and functions of said network managed system, said XML document being identified by a unique identifier, and in that said network managed system is adapted to receive generic commands from said network management application, said generic commands enabling to read, update, create or delete said elementary resources.

A third object of the invention is a network management application for managing at least a network managed system, **characterized in that** said network management application is adapted to transmit to said managed element generic commands enabling to read, update, create or delete elementary resources arranged in a XML document comprised in said network managed, said generic commands being transmitted by using a unique identifier of said XML document.

The features and advantages of the invention will become more apparent from the following detailed description with reference to the attached figures wherein:
- Figure 1, already described, represents schematically different network components involved in a management solution according to the state of the art.
- Figure 2 represents schematically different network components involved in a management solution according to a preferred embodiment of the invention.

As shown in figure 2, the management solution classically comprises components already described with figure 1, namely:
- A managed system 2;
- A management application 3;

Management application 3 has been chosen by a network administrator to manage the managed system 2.

According to one specific embodiment of the invention, managed system 2 also comprises a XML document 20, and interactions between management application 3 and managed system 2 are realised by using HTTP commands.

The present invention is based on the observation that development management solutions can be achieved in part by adhering to a certain number of REST (REpresentational State Transfer) principles and REST characteristics. REST (Representational State Transfer) principles have been recommended to develop applications in distributed environment such as the World Wide Web. The fundamental characteristics of a REST architecture are:
- All application states and functionalities present on a server are divided into resources.
- Each resource is uniquely addressable using an universal syntax for use in hypermedia links;

Following the first REST principle, the invention consists in performing a decomposition of all the data and functions of managed system 2 into elementary resources. These resources are then listed in at least one XML. Each of the XML documents associated with managed system 2 can be identified with a unique identifier.

Since the resources are related to data and functions of said managed system 2, management application 3 can manage managed system 2 by transmitting generic commands on these resources.

Furthermore, XML documents 20 enable a tree representation of all the resources of the managed system. This tree representation will permit management application 3 to manage the managed system 2 by transmitting generic commands enabling to read, update, create or delete the elementary resources arranged in said XML documents 20. Said generic commands are transmitted to the managed system 2 using the unique identifier of the XML documents 20.

As an example, if the managed system is a personal computer of an enterprises employee named pc1, the elementary resource of such a managed element can be, among others:
- Its name and its identifier;
- The current load of its processor;
- The hard disks it is provided with, and the free capacity of these hard disks;
- The users which are currently connected.

In this case, all these elementary resources can be represented, for example, by the following instances of an XML document:

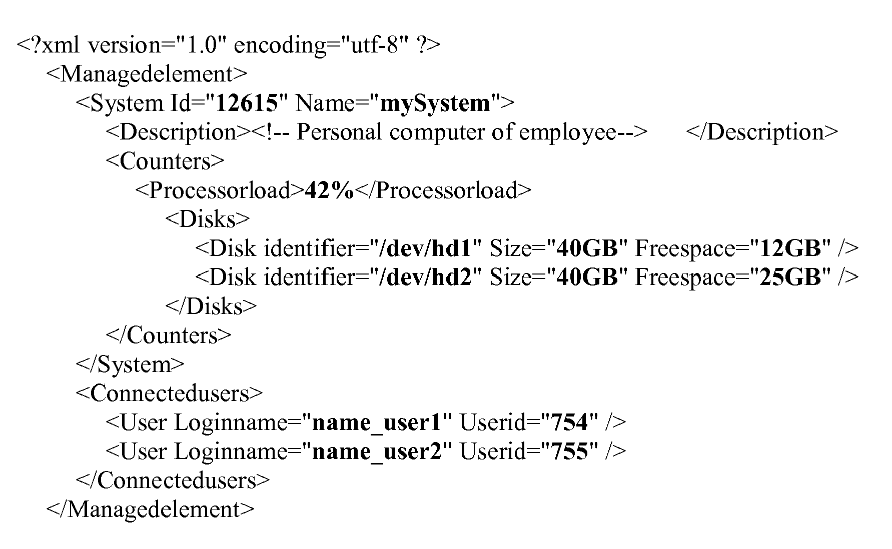

The main advantage of the method of the invention is that management application 3 is no longer adapted to the management of a specific managed system for which it provides the adequate management information.
In a preferred embodiment, a second REST principle is also applied. More precisely, the unique identifier attached to each XML document 20 is an URL (Universel Resource Locator) which specifies the address of the XML document 20 and, the transmitted commands enabling to read, update, create or delete are respectively the GET, PUT, POST, DELETE of the HTTP protocol.

The elementary resources represented in the XML document 20 may also be represented in additional XML documents, each of these additional documents being accessible with a unique URL. Advantageously, the URL of these additional XML documents can be directly deduced from the XML document 20.

When such XML documents 20 have been created in managed system 2 and when the HTTP protocol has been chosen to perform the interactions between management application 3 and managed system 2, the management application 3 can:
- Collect information on managed system 2 using GET command on the resource of the XML documents (step S2 in figure 2);
   Referring to the XML document comprising the elementary resources of managed system pc1 quoted above, management application 3 can retrieve entire XML document by issuing the following commands:
   o GET/pc1 /managedelement/system http/1.1 User-Agent: Firefox/ 2.0; and
   o GET/pc1 /managedelement/connectedusers http/1.1 User-Agent: Firefox/2.0
- Modify the way managed system 2 behaves using POST, PUT and DELETE command on the resource of the XML documents 20 (Step S3 in figure 2);
- Interpret message sent by the managed system by initiating a GET, POST or PUT command on a specific resource and waiting for its answer (Step S4 in figure 2). This answer can be sent by managed system 2 when a non solicited event related to the resource occurs or after a delay if no event occurs. An other possibility is that managed system 2 adds a resource by itself by using a PUT command, the new resource can then be collected by the management application using a GET or POST command. This second possibility allows an interaction which is not feasible with the existing management solution. Indeed, by using this possibility, the resource representing the non solicited event remains accessible from managed system 2. On the contrary, in existing management solution, there was no specific possibility for a managed system to retrieve an information which has been sent to a management application.

The advantage of using HHTP commands is that the present invention can then be applied on existing managed system 2 and management application 3. Indeed, a decomposition of the data and functions in elementary resources can be realised on any existing managed element 2 and, former commands such as namely SNMP, CMIS, or NETconf commands used by existing management application can be mapped into generic command GET, PUT, POST, DELTE of the HTTP protocol. For instance, the mapping of former commands and HTTP command can be realised by managed system 2.

In addition, if the user agent is a web browser 4 such as, namely, Internet Explorer®, Firefox® or Safari®, the facts that managed system 2 comprises such an XML document 20 and that HTTP protocols is supported by managed system 2, enable such a user agent to:
- Collect information on managed system 2 using GET command on the resource of the XML documents (Step S2 in figure 2);
- Modify the way managed system 2 behaves using POST, PUT and DELETE command on the resource of the XML documents 20 (Step S3 in figure 2).
- Interpret message sent by managed system 2 by using a Javascript plugging to establish permanent HTTP connection with managed system 2 (Step S4 in figure 2).

Network management application can then consist in such a web browser 4.

Another advantage of using HTTP commands and elementary resources decomposition is that, an intermediary node can be easily introduced between managed system 2 and management application 3 or between managed system 2 and the user agent when the user agent is a web browser 4. In such a case, the intermediary node:
- Intercepts interaction;
- Uses parameters of the HTTP commands sent to perform the interaction, to perform caching, encoding translation or other value added function; and
- Retransmits interaction with value added information using HTTP protocol.

Advantageously, the method of the invention can also be applied to enables interactions between user agent 1 and application management 3.

## Claims

1. Method for managing a network comprising a management application (3) adapted to transmit commands to a managed system (2), **characterized in that** said method comprises the step of:
- defining at least one XML document (20) in said managed system, said XML document (20) including a list of elementary resources related to data and functions of said managed system (2), and being identified by an unique identifier;
- transmitting (S1, S2, S3) from said management application generic commands enabling to read, update, create or delete said elementary resources of said XML document (20) by using said unique identifier.

2. The method for managing a network as claimed in claim 1, **characterized in that** generic commands consist on anyone of the commands GET, POST, PUT or DELETE of the HTTP protocol.

3. The method for managing a network as claimed in anyone on the preceding claims, **characterized in that** said unique identifier is an URL.

4. Network managed system (2) adapted to receive commands from a network management application (3), **characterized in that** it comprises at least one XML document (20) including a list of elementary resources relative to data and functions of said network managed system (2), said XML document (20) being identified by a unique identifier, and **in that** said network managed system is adapted to receive generic commands from said network management application (3), said generic commands enabling to read, update, create or delete said elementary resources.

5. Network management application (3) for managing at least a network managed system (2), **characterized in that** said network management application (3) is adapted to transmit to said managed element (3) generic commands enabling to read, update, create or delete elementary resources arranged in a XML document (20) comprised in said network managed (3), said generic commands being transmitted by using a unique identifier of said XML document (20).

## Amended claims

### Amended claims in accordance with Rule 137(2) EPC.

**1.** Method for managing a network comprising a management application (3) adapted to transmit commands to a managed system (2), said method comprising the step of:
- defining at least one XML document (20) in said managed system, said XML document (20) including a list of elementary resources related to data and functions of said managed system (2), and being identified by an URAL as unique identifier;
- transmitting (S1, S2, S3) from said management application managing commands enabling to read, update, create or delete said elementary resources of said XML document (20) by using said unique identifier.
**characterized in that** said managing commands are the generic commands GET, POST, PUT and DELETE of the HTTP protocol which are directly used on said elementary resources of said XML document (20) by using said unique identifier for respectively reading, updating, creating and deleting said elementary resources.

**2.** Network managed system (2) adapted to receive commands from a network management application (3), said Network managed system (2) comprising at least one XML document (20) including a list of elementary resources relative to data and functions of said network managed system (2), said XML document (20) being identified by an URL as unique identifier, and said network managed system being adapted to receive managing commands from said network management application (3), said generic commands enabling to read, update, create or delete said elementary resources, **characterized in that** said managing commands are the generic commands GET, POST, PUT and DELETE of the HTTP protocol which are directly used on said elementary resources of said XML document (20) by using said unique identifier for respectively reading, updating, creating and deleting said elementary resources.

**3.** Network management application (3) for managing at least a network managed system (2), said network management application (3) being adapted to transmit to said managed element (3) managing commands enabling to read, update, create or delete elementary resources arranged in a XML document (20) comprised in said network managed (3), said managing commands being transmitted by using an URAL as unique identifier of said XML document (20), **characterized in that** said managing commands are the generic commands GET, POST, PUT and DELETE of the HTTP protocol which are directly used on said elementar resources of said XML document (20) by using said unique identifier for respectively reading, updating, creating and deleting said elementary resources.
